Europäisches Patentamt

European Patent Office

Office européen des brevets

(11) Publication number: **0 221 178 B1**

# EUROPEAN PATENT SPECIFICATION

(45) Date of publication of patent specification: **24.02.93** (51) Int. Cl.5: **H01M 8/10**

(21) Application number: **86903817.4**

(22) Date of filing: **15.05.86**

(86) International application number:
**PCT/US86/01049**

(87) International publication number:
**WO 86/06879 (20.11.86 86/25)**

(54) **Use of a cell component in fuel cell.**

(30) Priority: **17.05.85 US 734992**

(43) Date of publication of application:
**13.05.87 Bulletin 87/20**

(45) Publication of the grant of the patent:
**24.02.93 Bulletin 93/08**

(84) Designated Contracting States:
**BE DE FR GB IT NL**

(56) References cited:
| | |
|---|---|
| DE-A- 1 910 480 | DE-A- 3 321 984 |
| US-A- 3 528 852 | US-A- 4 246 090 |
| US-A- 4 272 353 | US-A- 4 330 654 |
| US-A- 4 358 545 | US-A- 4 370 209 |
| US-A- 4 462 877 | US-A- 4 610 762 |

**ENERGY, THE INTERNATIONAL JOURNAL, vol. 11, no. 1/2, 1986, pages 137-151; A.J. APPLEBY et al.: "Solid polymer electrolyte fuel cells (SPEFCs)"**

(73) Proprietor: **THE DOW CHEMICAL COMPANY 2030 Dow Center Abbott Road P.O. Box 1967 Midland Michigan 48640-1967(US)**

(72) Inventor: **ALEXANDER, Lloyd, E.
1401 N. Chenango Drive
Angleton, TX 77515(US)**
Inventor: **EISMAN, Glenn, A.
18407 Point Lookout Drive
Nassau Bay, TX 77058(US)**

(74) Representative: **Smulders, Theodorus A.H.J., Ir. et al
Vereenigde Octrooibureaux Nieuwe Parklaan 97
NL-2587 BN 's-Gravenhage (NL)**

## Description

The present invention relates to the use of a cell component in a fuel cell, said component having two planarly disposed electrodes bonded to or intimately pressed against opposing sides of a proton exchange active film which has sulfonyl ion exchange active groups present in their protonated form, and further has an equivalent weight of less than 1000.

Fuel cells are electrochemical devices which convert chemical energy directly into electrical energy by the oxidation of a fuel supplied to the cell. A fuel cell is generally composed of two gas diffusion electrodes adjacent to, and in contact with, an electrolyte. The fuel cell includes a means for supplying a fuel to a positive electrode and an oxidant to a negative electrode. Positioned between the elctrodes is a solid or liquid electrolyte.

Fuel cell electrolytes transport ionic species between the positive and negative electrodes. Electrolytes may be operable at relatively high temperatures (greater than 210°C), such as in solid oxide fuel cells, wherein a solid conductive $ZrO_2$ is the means for ion conduction.

At lower temperatures (less than 210°C), liquid electrolyte fuel cells of various kinds are well known. These generally are classified as alkaline or acid electrolyte fuel cells. Alkaline fuel cells use aqueous solutions of sodium or other alkali metal hydroxides as the ion conducting means. Acid fuel cells use acid electrolytes such as sulphuric acid, trifluoromethanesulfonic acid, or phosphoric acid as the ion conducting means.

One type of acid electrolyte fuel cell employs proton exchange polymer films as the electrolyte. There, the electrolyte is the plurality of acid functional groups chemically bonded to the polymer film's polymer backbone. These proton exchange polymer films may be, for example, a sulfonated polystyrene, or more preferably, a substantially fluorinated sulfonic acid polymer such as DuPont's Nafion ion exchange polymer film. The term "solid polymer electrolyte" is often used to describe these ion exchange polymer film structures.

Proton exchange polymer film fuel cells are well known and are described, for example, in U.S. Patent 3,134,697. Early solid polymer electrolyte proton exchange polymer film fuel cells, although operable, experienced limited life because of the chemical instability of the polymer films themselves. However, the subsequent development of perfluorinated ion exchange active polymeric materials such as DuPont Nafion made possible fuel cells of this type with good operating characteristics and lifetimes of many thousands of hours.

Solid polymer electrolyte proton exchange polymer film fuel cells employing Nafion perfluorosulfonic acid polymer films generally operate at temperatures of about 80°C. Because the polymer film itself is substantially gas impermeable, no porous support matrix is needed in order to prevent gas mixing (as is generally the case with liquid electrolyte fuel cells). With proper external support, pressure differentials of 68g kPa, or more, between the fuel gas and the oxidant gas can be realized in actual operation. These characteristics are highly desirable, and make it possible to operate these fuel cells with air as an oxidant by increasing the pressure of the air such that a higher partial pressure of oxygen is attained while not requiring compression of the fuel gas also. Thus, for example, a hydrogen/air fuel cell may operate with 101 kPa pressure on the fuel side while operating at 405 kPa or more pressure of air on the oxidant side of the cell.

In practice, the electrodes are generally physically bonded to the active proton exchange polymer film by a pressure/heat process. See, for example, U.S. Patent 4,272,353.

Although these fuel cells present desirable properties, they are quite expensive because of a combination of polymer film cost and cost of the platinum and other precious metal catalysts required to make successful, long lasting fuel cell electrodes. A way of reducing the cost of power produced in these fuel cells would be highly desirable.

In the present state of the art, the perfluorosulfonic acid polymer films manufactured by DuPont, as described in U.S. Patent 3,282,875, are employed as a film having an equivalent weight of 1100-1200. Equivalent weight means the weight of polymer which will neutralize one equivalent of base. It is thought that the ionic conductivity of the polymer film is inversely proportional to the equivalent weight of the polymer film. It is thought that Nafion ion exchange polymer film polymers having lower equivalent weights than those used in the present state of the art may exist (see European Patent Application 0,122,049), however, the physical stability of polymer films having equivalent weights below about 950 are poor, as reported in "Dual Cohesive Energy Densites of Perfluorosulphonic Acid (Nafion) Membrane", Polymer, Vol. 21, pp. 432-435, April 1980. It would be highly desirable to decrease the equivalent weight of the proton exchange solid polymer electrolyte polymer film in order to reduce the resistance power loss of ion transfer in the fuel cell while at the same time retaining acceptable physical properties.

One way of reducing the ionic resistance of Nafion ion exchange polymer films is by incorporating as much water as possible into the polymer film and increasing the ratio of water contained per ionic functional group. This may be done by saturating the polymer film with water under temperature and pressure conditions more extreme than those normally encountered in use (see U.S. Patent 3,684;747). This treatment has been found necessary to achieve optimum performance of the Nafion polymer film in certain proton-exchange applications (see "Solid Polymer Electrolyte Water Electrolysis", H. Takenake, E. Torikai, Y. Kawami and H. Wakabayashi; Int. J. Hydrogen Energy, Vol. 7, No. 5, pp. 397-403, 1982). Nafion as a proton exchange solid. polymer electrolyte polymer film experiences a permanent performance loss when operated for a substantial period of time under drying conditions. As used herein, drying condition means the condition in which the polymer film or a portion of the polymer film is contacted with fuel gas or oxidant gas which is substantially unsaturated with water at the operating temperatures of the cell for a time sufficient to remove a substantial portion of the water from the polymer film.

When Nafion perfluorosulfonic acid polymer is dry and is in its acid form (having pendant groups that terminate in $-SO_3H$), a softening, or glass-like transition occurs at a temperature of approximately 110°C as determined by the Tan Delta vs. temperature plot, as determined by the DMS experiments discussed later. This transition is known as the alpha transition ("Dynamic Mechanical Studies of Partially Ionized and Neutralized Nafion Polymers", Thein Kyu, Mitsuaki Hasihyama, and A. Eisenberg, Can. J. Chem., Vol. 61, p. 680, 1983).

When drying conditions are experienced in the fuel cell, a rearrangement of ionic regions is thought to occur because of changes in visco-elastic properties of the polymer. ("Intrinsic Conductivity of Perfluorosulfonic Acid Membranes and Its Implication to the Solid Polymer Electrolyte (SPE) Technology", Richard S. Yeo, Proceedings of the Symposium on Transport Processes in Electrochemical Systems, edited by R. S. Yeo, Theodore Katan, Der-Tau Chin, Proceedings Volume 82-10, The Electrochemical Society, Inc., Pennington, N.J. 08534). When a polymer film is dried, the beneficial effect of the water swelling of the Nafion proton exchange polymer film is lost, and the polymer film has a higher ionic resistance. Re-equilibration of the polymer film to its former level of hydration is not easily done in situ in the fuel cell. Drying conditions may also cause physical damage to the polymer film which may result in cracks or tears in the polymer film. This may allow mixing of the fuel gas and the oxidant and cause catastrophic failure of the cell.

It has been surprisingly found that it is possible, by the practice of the present invention, to decrease the equivalent weight of the solid polymer electrolyte while at the same time limiting the water uptake of the polymer film per functional group, compared to polymer films of the prior art.

Also, contrary to known art, it has been found possible to increase the ionic conductivity of the proton exchange polymer film of the present invention while reducing the water uptake of the solid polymer electrolyte polymer film per functional group.

It is also desirable to achieve the maximum efficiency of conversion of fuel gas available energy to valuable electrical energy, while at the same time also recovering the maximum amount of total electrical and heat energy possible; therefore, it is desirable to operate a fuel cell at temperatures such that a suitable level of steam pressure may be achieved by recovery of the fuel cell waste heat. For practical use as a heat source, pressures of 103 to 207 kPa gauge are usually sufficient. These steam pressures correspond to temperatures of 120°C to 135°C.

It has been surprisingly discovered that the solid polymer electrolyte polymer film prepared according to the present invention have unique physical properties which are seen to be useful in higher temperature proton exchange polymer film fuel cells.

The invention is characterized in that the cell component is used in a fuel cell operating at above 110°C, wherein the film which forms part of the cell component
- comprises a copolymer of at least two monomers,
 a first monomer being selected from tetrafluoroethylene, trifluoromonochloroethylene, trifluoroethylene, vinylidene fluoride, 1,1-difluoro-2,2-dichloroethylene, 1,1-difluoro-2-chloroethylene, hexafluoropropylene, 1,1,1,3,3-pentafluoropropylene, octafluoroisobutylene, ethylene, vinyl chloride, trifluoronitrosomethane, perfluoronitrosoethane and alkyl vinyl ester; and
 a second monomer being selected from compounds represented by the general formula:

$$Y\text{-}(CF_2)_a\text{-}(CFR_f)_b\text{-}(CFR'_f)_c\text{-}O\text{-}[CF(CF_2X)\text{-}CF_2\text{-}O]_n\text{-}CF = CF_2$$

where
Y is $-SO_3H$;
a is 0-6;

3

b is 0-6;

c is 0 or 1;

provided a + b + c is not equal to 0;

X is Cl or Br;

n is 0 to 6; and

$R_f$ and $R'_f$ are independently selected from the group consisting of F, Cl, perfluoroalkyl radicals having from 1 to about 10 carbon atoms and fluorochloroalkyl radicals having from 1 to about 10 carbon atoms, and

- possesses a storage modulus of greater than 1 x $10^9$ $\mu N/cm^2$ at a temperature greater than 110°C.

In describing the present invention, there are a number of physical properties used.

"Dynamic Mechanical Stress" (DMS) is a measure of the visco-elastic response of a polymer found by measuring the stress of the polymer versus the strain exerted on the polymer. DMS measures the storage modulus and the loss modulus, as discussed below. Commercial instruments are available to measure DMS, for example, the Rheometrics Mechanical Spectrometer. Such measurements are well known to those familiar with polymer chemistry.

"Storage modulus" measures the relative stiffness of a material. A drop in the modulus indicates a change in the polymer, such as a transition or a motion. A lower storage modulus indicates the material is not as stiff as a material having a higher storage modulus. A decrease in the storage modulus occurring over a narrow temperature range, is evidence of a glass-like to rubber-like transition taking place.

"Loss modulus" is a measure of the dissipation of energy (as heat) by friction of the polymer chains in motion as they react to an applied stress.

"Tan Delta" is a calculated value equal to the ratio of the loss modulus to the storage modulus.

The "alpha transition" is the high temperature transition as seen in the Tan Delta vs. temperature plot for the protonated form of this class of perfluorosulfonic acid polymer films such as Nafion and those of the present invention. See "Dynamic Mechanical Studies of Partially Ionized and Neutralized Nafion Polymers", Thein Kyu, Mitsuaki Hasihyama, and A. Eisenberg, Can. J. Chem., Vol. 61, p. 680, 1983, for a more complete discussion of the alpha transition.

To be useful in the present invention, the proton exchange active film has (1) sulfonyl ion exchange active groups present in their protonated form, (2) an equivalent weight of less than 1000, and (3) a storage modulus of greater than 1 x $10^9$ $\mu N/cm^2$ at a temperature greater than 110°C.

Polymers for use in the present invention contain sulfonic proton exchange groups in their protonated form, i.e. $-SO_3H$. Since most patents teach the preparation of polymer films in their $-SO_2F$ form, the polymer must be converted to its protonated form. This is generally done by hydrolysis of the $-SO_2F$ form of the polymer film to the metal salt form using a base such as NaOH or KOH. Subsequently, the metal salt form of the polymer film is converted to the protonated form ($-SO_3H$) using an acid such as sulfuric acid or hydrochloric acid. Such conversions are well known to persons knowledgeable in the art and are illustrated in the examples of the present invention.

The polymer films of the present invention have an equivalent weight less than 1000. At higher operating temperatures (up to 150°C) higher equivalent weight polymers (from 800 to 1000) may be preferable.

It may generally be said that the lower the equivalent weight, the better for ionic conductivity. However, film properties decrease as the equivalent weight decreases and a compromise between the two must be met. Thus, polymers having equivalent weights below about 500 tend to have such poor film properties, that they are generally not useful in the present invention.

The equivalent weight of the polymer should be as low as possible to reduce resistance power loss in the solid polymer electrolyte means, however the advantageous physical properties of the present invention must preferably be maintained.

In defining the present invention, it is helpful to describe a useful range of polymer properties in the precursor form ($-SO_2F$) by referring to an apparent viscosity measurement. Polymers found most useful in the scope of the present invention are those having an apparent viscosity in the precursor form of above $10^2$ Pa.s when the shear rate is from 10/s to 100/s and at a maximum temperature not to exceed the decomposition temperature of the precursor form of the polymer. This temperature generally is 300°C but may be from 250°C to 350°C. Of course, higher viscosity materials may be employed; however, to be preferably useful it is advantageous that they be fabricable by means such as pressing or extrusion to form precursor polymer film films with acceptable melt strength properties. Notwithstanding, other fabrication methods, such as solution casting may be employed.

It has been discovered that polymers having viscosities below 1.4 x $10^2$ Pa.s at shear rates of 100/ s and viscosities below 2.2 x $10^2$ Pa.s at shear rates of 10/s. were not sufficiently viscous to form suitable films. Conversely, polymers having viscosities greater than $1.6 \times 10^3$ Pa.s at shear rates of 100/s and viscosities greater than $7.5 \times 10^3$ Pa.s at shear rates of 10/s were too viscous and were difficult to work with to form films.

The polymers for use in the present invention are polymers having at least two monomers, one selected from the first group of monomers and a second selected from a second group of monomers. Optionally, the polymer may include a third monomer selected from a third group of monomers.

The first monomer consists of one or more monomers selected from the group consisting of tetrafluoroethylene, trifluoromonochloroethylene, trifluoroethylene, vinylidene fluoride, 1,1-difluoro-2,2-dichloroethylene, 1,1-difluoro-2-chloroethylene, hexafluoropropylene, 1,1,1,3,3-pentafluoropropylene, octafluoroisobutylene, ethylene, vinyl chloride, trifluoronitrosomethane, perfluoronitrosoethane and alkyl vinyl ester.

The second monomer consists of one or more monomers selected from compounds represented by the general formula:

$$Y-(CF_2)_a-(CFR_f)_b-(CFR'_f)_c-O-[CF(CF_2X)-CF_2-O]_n-CF=CF_2$$

where
Y is $-SO_3H$;
a is 0-6;
b is 0-6;
c is 0 or 1;
provided $a + b + c$ is not equal to 0;
X is Cl or Br;
n is 0 to 6; and
$R_f$ and $R'_f$ are independently selected from the group consisting of F, Cl, perfluoroalkyl radicals having from 1 to 10 carbon atoms and fluorochloroalkyl radicals having from 1 to 10 carbon atoms.

The third and optional monomer suitable is one or more monomers selected from the compounds represented by the general formula:

$$Y'-(CF_2)_{a'}-(CFR_f)_{b'}-(CFR'_f)_{c'}-O-[CF(CF_2X')-CF_2-O]_{n'}-CF=CF_2$$

where
Y' is Cl or Br;
a' and b' are independently 0-3;
c' is 0 or 1;
provided $a' + b' + c'$ is not equal to 0;
n' is 0-6;
$R_f$ and $R'_f$ are independently selected from the group consisting of Br, Cl, F, perfluoroalkyl radicals having from 1 to 10 carbon atoms, and chloroperfluoroalkyl radicals having from 1 to 10 carbon atoms;
X' is F, Cl, Br, or mixtures thereof when $n' > 1$.

Also, it is preferable to attain usable physical properties in the proton-active form ($-SO_3H$) of the polymer films of the present invention; so that substantial resistance to tearing of puncturing is attained. These criteria may be described by various tests well known to those skilled in the art, such as Mullin burst strength and elongation at break (tensile) Perhaps one of the better measurements to determine the suitability of polymers for use in the present invention is the storage modulus. The storage modulus of a polymer may be obtained using instruments designed to measure DMS, as described above and shown in the examples.

The methods employed in manufacturing polymers useful in the present invention are well known to those skilled in the art. For example, polymerization methods may be conducted in an aqueous media using a free radical initiator, see for example, U.S. Patent 3,282,875. However, the polymerization methods must be adjusted according to the specific reactant species, reaction conditions, and process to obtain polymers having equivalent weights less than 1000.

The polymer films used in the present invention may also be used unsupported or used with a porous matrix structure or a supporting-scrim. In this manner, physical properties acceptable for some process applications may be realized.

For use in a proton exchange solid polymer electrolyte polymer film fuel cells, the supported polymer films of the present invention may be prepared and supported to be capable of withstanding pressure differentials of over 68g kPa. It is preferred that a proton exchange electrolyte polymer film of the present

5

invention be capable of maintaining separation of fuel and oxidant gases wherein the pressure differential employed is at least 103 kPa.

The present invention relates to the use of the cell component in a fuel cell which operates at above 110°C. Fuel cells of the type having a proton exchange polymer film used in a solid polymer electrolyte form are particularly suitable. Such cells are well known in the art and are described, for example, in Fuel Cells and Fuel Batteries, B. A. Liebhafsky and E. J. Cairus, John Wiley and Sons, New York, 1968.

One type of fuel cell suitable for use with the present invention comprises a container holding the components of the fuel cell. The size and shape of the container is not critical. However, the walls of the container should be of sufficient thickness, integrity and strength to hold the contents of the fuel cell. The materials of construction contacting the internal components of the fuel cell are preferably substantially completely unreactive with the internal components of the cell. Suitable materials of construction include such things as niobium, titanium, Kynar (a registered trademark of Pennwalt Corporation) and graphite.

The cell has at least two electrodes, an anode and a cathode. A variety of materials are suitable for use as electrode catalysts including such things as platinum group metals and platinum black. The electrodes are bonded to or in intimate contact with the polymer film. Methods for making suitable electrodes are defined in U.S. 4,272,353.

Positioned between and in contact with each of the electrodes is a solid polymer electrolyte material. The solid polymer electrolyte material is an ion exchange active polymer which has sulfonyl ion exchange active groups.

For proper operation of the fuel cell of the present invention, it is preferable for the solid polymer electrolyte film to be substantially impermeable to the reactant gases. The gas permeability of the proton exchange polymer film seems to be related to the water content of the polymer film. A polymer film having good film properties may have high gas permeability, or a polymer film having poor film properties may have low gas permeability. It is desirable to have as low a gas permeability as possible while retaining sufficient mechanical strength.

The anode and the cathode should both be in intimate contact with the solid polymer electrolyte. Such contact can be assured by bonding the electrodes to the solid polymer electrolyte, or by pressing the electrodes against the solid polymer electrolyte. In a solid polymer electrolytic cell, the stack is generally loaded hydraulically by means of a bladder or by mechanical compression to maintain the electrical contact of the components, see, for example; "Interim Report New Membrane Catalyst for Solid Polymer Electrolyte Systems", P.O. No. 9-X53-D6272-1 Project Engineer, R. J. Lawrence, prepared for University of California, Los Alamos National Lab, Los Alamos, N.M. 87545.

The polymer film is preferably pre-conditioned by contacting the polymer film with water at about the temperature at which the polymer film will be kept in an operating electrochemical cell. This has the effect of pre-conditioning the polymer film at about the activity of electrolyte present in the particular electrochemical cell so that it will be substantially dimensionally stable in the cell. It is also preferable to precondition the polymer film at such a temperature that no glass transition occurs, so that over-swelling of the ionic regions of the polymer film is avoided. In this manner, irreversible loss of performance upon encountering drying conditions in a fuel cell are thus prevented. It is preferable in the practice of the present invention to both pre-condition and operate the fuel cell below the alpha transition temperature of the protonated form of the polymer, such that dehydration and re-hydration of the polymer film in a fuel cell are substantially completely reversible.

Polymer films used in the present invention may be equilibrated in water under pressure so that they may retain an equilibrium amount of water while operating at temperatures sufficient to produce a useable pressure of steam from waste heat produced in the fuel cell. This may be accomplished while not concurrently surpassing the alpha transition of the polymer. Thus, the water equilibria for these polymer films is thought to be substantially completely reversible at surprisingly high temperatures, resulting in a stable fuel cell which is capable of operating at a higher recovery of useable electrical plus heat energy per unit of fuel energy consumed in the process.

The fuel cells used in the present invention may be operated at temperatures above the alpha transition temperature of the polymer film. However, at such temperatures, support of the polymer film may be necessary because the polymer softens. Preferably, therefore, the fuel cells are operated at temperatures less than the alpha transition of the polymer film. For the preferred polymers of the present invention, temperatures less than 130°C are suitable.

The fuel cell used in the present invention may be used to produce electrical energy by feeding a fuel to the anode compartment and an oxygen-containing gas to the cathode. The fuel must contain hydrogen. The hydrogen can be pure hydrogen or it can be mixed with inert gases, such as carbon dioxide. Preferably, the hydrogen gas is as pure as possible. The fuel can be reformed natural gas or other reformed hydrocarbons so long as the carbon monoxide level is kept sufficiently. low to avoid poisoning the catalyst present on the electrodes of the fuel cell. The oxidant can be pure oxygen or air. Also, the oxidant can be bromine, chlorine or other oxidants in the case of hydrogen-halide type fuel cells.

## EXAMPLE 1.

This example shows that films can be made that have equivalent weights less than 1000 that have sufficient film properties to allow them to be formed into films.

A series of polymers prepared according to the teaching of U.S. Patent 4,330,654 were analyzed to determine their equivalent weight. The polymers and their equivalent weights are shown below in Table I.

TABLE I

| Polymer | Eq. Wt. |
|---------|---------|
| "A"     | 639     |
| "B"     | 686     |
| "D"     | 850     |
| "E"     | 950     |

The viscosity of each of the polymers was determined at 300°C using an Instron extrusion capillary rheometer. An extrusion capillary rheometer is a miniature ram extruder fitted with a capillary die and instrumented so that melt temperature and pressure behind the die can be monitored. Speed of extrusion can be varied so that the properties of a plastics melt can be determined under a wide range of shear rates. Dies with different lengths and angles of entry are available to permit study of the effect of die design. on output and quality of extrudate.

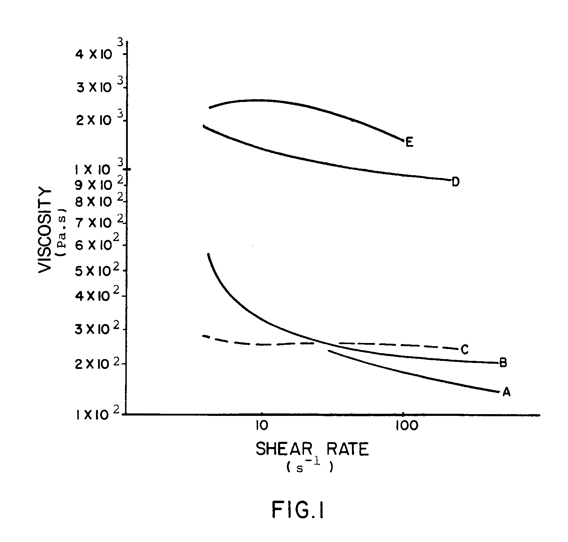

The results are shown in Figure 1. Figure 1 is graphed on a log-log graph. The results show that polymers having equivalent weights less than 1000 have physical properties that make them suitable for forming into films.

Polymers "A" and "B" were formed into films by individually hot pressing each polymer at a temperature of about 300°C. Polymers "D" and "E" were melt extruded.

The films were then converted from their sulfonyl fluoride form ($-SO_2F$) to their sodium salt form ($-SO_3 Na^+$) by hydrolyzing in a 25 weight % aqueous sodium hydroxide solution at 90°C for 8 hours.

Then each of the films was acidified in a 24 weight percent aqueous sulfuric acid solution at 90°C for 24 hours. The sample was then washed three times with water. Then, each of the films was hydrated by boiling in water for about two hours. Each was then removed and placed in a sealed plastic bag to prevent drying.

The films prepared from polymer "D" and the films prepared from polymer "E", along with the Nafion polymer film prepared in Comparative Example 2 were tested for tensile strength at break and the degree of elongation at break.

Tensile tests were conducted using an Instron (Model 1125) tensilometer at both room temperature and high temperature/high humidity conditions. A Thermotron environmental chamber, was used to control the temperature at 90°C and the humditiy at 100% for the high temperature test.

Each polymer sample was cut to approximately 76 mm in length and 13 mm in width. Using the Instron tensilometer, stress was applied by stretching the polymer film at a rate of 51 mm per minute.

Each polymer was tested at 25°C and 90°C. The films tested at 25°C were tested at ambient atmospheric conditions. To avoid drying, each of the samples were tested immediately after their removal from the sealed plastic bag.

The results of the tests are shown in Table

TABLE II

| Polymer Film | Eq. Wt. | Temp. (°C) | Stress (kPa) | % Elongation at break |
|---|---|---|---|---|
| "D" | 850 | 25 | 28958 | 140 |
| "E" | 950 | 25 | 26683 | 150 |
| "D" | 850 | 90 | 15858 | 200 |
| "E" | 950 | 90 | 16616 | 260 |

When compared with Nafion polymer film data of Comparative Example 2, this shows that at 25°C polymers D and E were stronger than Nafion, even though polymers D and E had equivalent weights substantially lower than 1000. The results of the samples run at 90°C shows that polymers D and E were stronger and had substantially less elongation.

The films prepared from polymers "A" and "E" were evaluated using Dynamic Mechanical Spectroscopy. The storage modulus and the loss modulus were determined using Dynamic Mechanical Stress techniques. Tan Delta was calculated using the storage modulus and the loss modulus for each of the polymer films over the temperature range of from 15°C to 240°C.

The original dimensions of each of the samples was approximately 60 mm x 12 mm x 3 mm. The polymers were kept in a nitrogen environment throughout the testing. The spectra were recorded with a Rheometrics Mechanical Spectrometer Model 605. The oscillatory frequency of the polymer was 1 Hertz with a 0.2% strain. The samples were removed from their sealed plastic bag and placed in the DMS unit wet. There, they were individually heated in increments of 5°C and data was taken at each 5° increment.

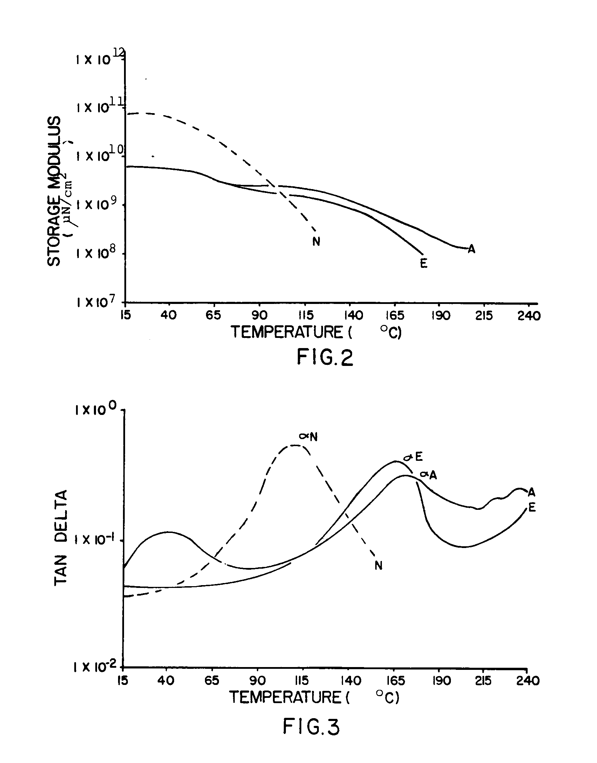

The results of the tests are shown in Figure 2 as the storage modulus and Figure 3 as Tan Delta. These graphs are made on semi-log paper with the "y" axes being in log form.

It is surprising that polymer films from both Polymer A (639 equivalent weight) and Polymer E (950 equivalent weight) retain a relatively stable visco-elastic condition much past the temperature at which Nafion polymer films begin an abrupt change to a more liquid state, as shown in Comparative Example 3.

Even more surprising, and completely unexpected, is the high value of the alpha transition peaks (glass transition temperatures) exhibited by these films.

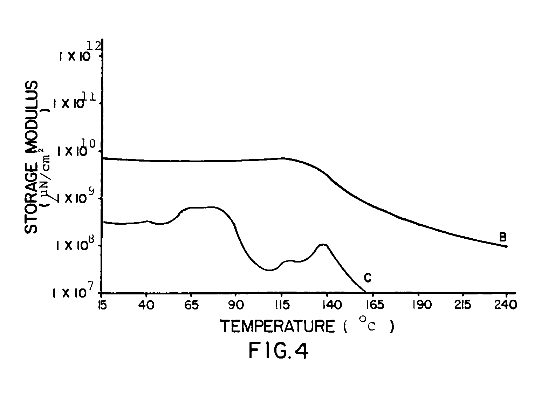

Polymer "B" was tested in the same manner. The results of that test is shown in Figure 4. This plot was made on semi-log paper, with the "y" axis being in log form.

Ion exchange films "A", "B", "D" and "E" were individually evaluated to determine the amount of water absorbed by each film using the following procedure:

(1) The film was vacuum dried in its $-SO_3H$ form for 3 days at 80°C;

(2) each sample was weighed;

(3) the sample was placed in boiling water for 30 minutes;

(4) each sample was removed from the boiling water and its surface was blotted dry with a towel; and

(5) the film was reweighed to determine how much water had been absorbed.

Steps 2 through 5 were repeated until no further weight change was noted. The difference in weight represented the amount of water absorbed by the film.

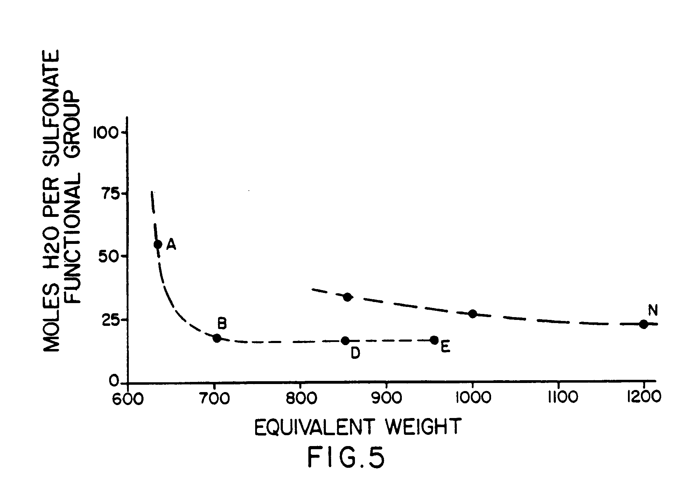

The results of the water absorption are shown in Table III and in Figure 5.

TABLE III

| (Moles water/equivalent of $SO_3H+$) | |
|---|---|
| Eq. Wt. | U.S. 4,330,654 Polymers |
| 1625 | 9.60* |
| 1200 | 14.2* |
| 1000 | 17.3* |
| 950 ("E") | 18.4 |
| 900 | 19.4* |
| 850 ("D") | 18.4 |
| 686 ("B") | 19.9 |
| 639 ("A") | 56.8 |
| 597 | 179 |

*calculated from U.S. Patent 4,358,545

When compared to the data of Comparative Example 4, this data shows that the hydration per functional group in Polymers "A", "B", "D" and "E" is less than the hydration per functional group in polymer films of the prior art. Polymers having a low hydration would be expected to have a lower ionic conductivity than polymers containing more water per functional group. Surprisingly, the ratio of water per functional group in the polymer films of the present invention remains substantially constant from an equivalent weight of from 1000 to less than 700. By contrast it is seen that the ratio of water per functional group in the Nafion® polymer films of the present state of the art increases significantly with decreased equivalent weight and, it is believed, are not useful below 1000 equivalent weight because of over swelling.

Ionic conductivity measurements were carried out using a YSI Model 31 Conductivity Bridge using 1000 Hertz.

Films prepared from polymers "A", "B", "D" and "E" were tested for ionic conductivity.

Each of the films was allowed to equilibrate in 5.5 weight percent HCl for 3 days prior to measuring the ionic conductivity.

The film being tested supported the two chambers of the ionic conductivity cell in which there is a platinum black coated platinum electrode in each half.

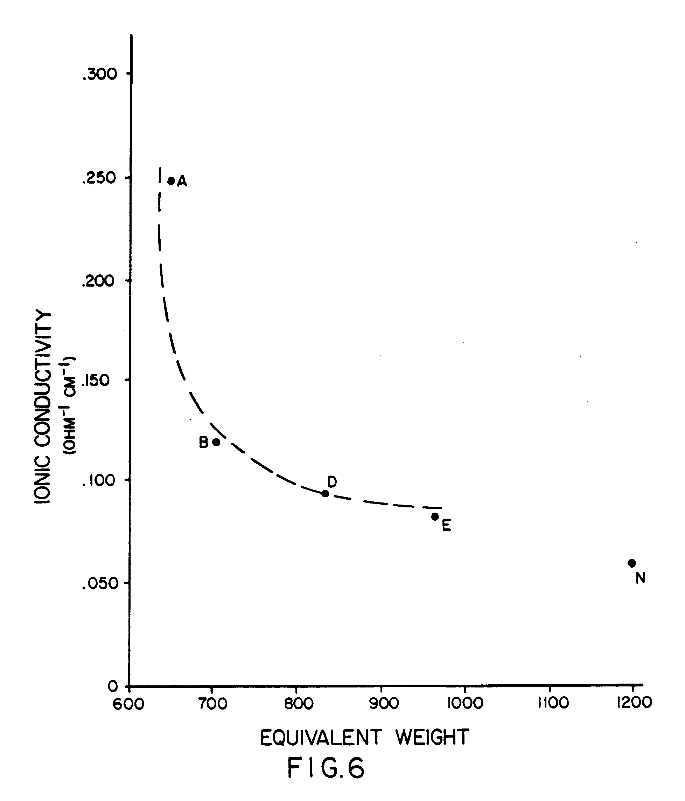

The results of the ionic conductivity measurements are shown in Figure 6.

When compared to the data of Comparative Example 5, this illustrates that polymer films of the present invention display higher ionic conductivities than those of the state of the art while concurrently retaining less water per unit functional group. Therefore, power loss in a fuel cell is expected to be significantly decreased.

In preparation for its use in a fuel cell, film "E" was soaked in a 25 weight percent caustic solution for 16 hours at 80°C to convert the sulfonyl fluoride functional groups to the salt form (Na+). It was removed, washed with boiling water, and dried. A platinum black cathode catalyst was applied to one side of the polymer film and a mixture of noble metals were applied to the other side as an anode catalyst. To apply the catalyst particles, the film was abraded with 600 grit sandpaper. Then an aqueous mixture of catalyst and polytetrafluoroethylene, in an 85:15 weight ratio, was applied to the surface of the polymer film by painting with a fine paint brush. The coated polymer film was then placed in a press held at 150°C for 5 minutes. The press pressure was increased to 10340 kPa on the coated area of the polymer film. The pressure and the temperature were kept constant for one minute and then reduced to ambient conditions. The catalyst loading was 4 mg catalyst per cm² of polymer film and covered an area of 50 cm².

The coated polymer film was then placed into a 24 weight percent sulfuric acid solution for. three hours at 90°C to convert the sulfonyl groups to the acid ($SO_3H$) form. Then, the coated polymer film was washed in water and placed into boiling water for 30 minutes prior to being placed into the fuel cell.

The polymer film was positioned between two pieces of highly porous graphite paper which had been coated with a wetproofing agent (T-30 polytetrafluoroethylene resin sold by E. I. DuPont de Nemours, Inc.). The wetproofed polymer film was sandwiched between two titanium screens. The screens also acted as gas distributing means in the operating fuel cell. The combination was then sandwiched between two pieces of nickel mesh and then fitted between two flanges. The fuel cell was connected to an external load. Each flange had a gas inlet and a gas outlet.

Hydrogen gas was fed through a gas inlet connected to the anode side of the polymer film and oxygen was fed through the gas inlet connected to the cathode side of the polymer film. The open circuit voltage was found to be 1.2 V. Upon increasing the load resistance of the cell, the voltage decreased and the voltage at a predetermined current density was recorded. The wattage output of the cell was found to be 5.15 W at 20.2 A/dm$^2$.

## EXAMPLE 2

In preparation for its use in a fuel cell, film "A" was soaked in a 25 weight percent caustic solution for 16 hours at 80°C to convert the sulfonyl fluoride pendant groups to the salt form (Na+). The polymer film was removed, washed with boiling water and dried. A platinum black cathode catalyst was applied to one side of the,polymer film and a mixture of noble metals were applied to the other side as an anode catalyst. To apply the catalyst particles, the film was abraded with 600 grit sandpaper. Then an aqueous mixture of catalyst and polytetrafluoroethylene, in an 85:15 weight ratio, was applied to the surface of the polymer film by painting with a fine paint brush. The coated polymer film was then placed in a press held at 150°C for 5 minutes. The press pressure was increased to 10340 kPa on the coated area of the polymer film. The pressure and the temperature were kept constant for one minute and then reduced to ambient conditions. The catalyst loading was 4 mg catalyst per cm$^2$ of polymer film and covered an area of 50 cm$^2$

The coated polymer film was then placed into a 24 weight percent sulfuric acid solution for three hours at 90°C to convert the sulfonyl groups to the acid (-SO$_3$E) form. Then, the coated polymer film was washed in water and placed into boiling water for 30 minutes prior to being placed into the fuel cell.

The polymer film was positioned between the two pieces of highly porous graphite paper which had been coated with a wetproofing agent (T-30 polytetrafluoroethylene resin sold by E.I. DuPont). The wetproofed polymer film was sandwiched between two pieces of titanium screen. The screen also acted as a gas distributing means in the operating fuel cell. The combination was then sandwiched between two pieces of nickel mesh and then fitted between two flanges. The fuel cell was connected to an external load. Each flange had a gas inlet and a gas outlet.

Hydrogen gas was fed through a gas inlet connected to the anode side of the polymer film and oxygen was fed through the gas inlet connected to the cathode side of the polymer film. Then open circuit voltage was found to be 1.2 V. Upon increasing the load resistance of the cell, the voltage decreased and the voltage at a predetermined current density was recorded. The wattage output of the cell was found to be 4.6 W at 20.2 A/dm$^2$.

## COMPARATIVE EXAMPLE 1

This example shows that some polymer films may have the proper equivalent weight but do not have sufficient strength to be suitable for use in the present invention.

A polymer was prepared according to the teaching of U.S. Patent 4,330,654 and analyzed to determine its equivalent weight. It was found to be 694.

The viscosity of the polymer was determined at 300°C using an Instron extrusion capillary rheometer as shown in Example 1. The result is shown in Figure 1, labeled "C".

Polymer "C" was formed into a film by hot pressing the polymer at a temperature of 300°C.

The film was then converted from its sulfonyl fluoride form (-SO$_2$F) to its salt form (-SO$_3$ Na$^+$) by hydrolyzing in a 25 weight % aqueous sodium hydroxide solution at 90°C for 8 hours.

Then the film was acidified in a 20 weight percent aqueous sulfuric acid solution at 90°C for 24 hours. The sample was then washed three times with water. Then, the film was hydrated by boiling in water for two hours. It was then removed and placed in a sealed plastic bag to prevent drying.

The storage modulus of Polymer "C" was tested in the same manner as the polymers in Example 1. The results are shown in Figure 4 labeled "C".

This shows that, although Polymer "C" has sulfonyl exchange groups and has an equivalent weight less than 1000, it does not have a storage modulus within the desired range to make it suitable for use in the present invention.

## COMPARATIVE EXAMPLE 2

A commercial Nafion® polymer film having an equivalent weight of 1100 was obtained from E. I. DuPont Company. It was obtained in its potassium salt form under the designation Nafion® 117. It was tested for tensile strength at break and the degree of elongation at break in the same manner described in Example 1.

The results of the tests are shown in Table IV.

TABLE IV

| Polymer Film | Eq. Wt. | Temp. (°C) | Stress (kPa) | % Elongation at break |
|---|---|---|---|---|
| Nafion | 1100 | 25 | 17580 | 140 |
| Nafion | 1100 | 90 | 11720 | >400* |

*did not break during test as performed

When compared to the data described in Example 1, this shows that at 25°C Polymers "D" and "E" were stronger than Nafion, even though Polymers "D" and "E" had equivalent weights substantially lower than 1000. The results of the samples run at 90°C shows that Polymers "D" and "E" were stronger and had substantially less elongation.

## COMPARATIVE EXAMPLE 3

Literature values of the storage modulus and Tan Delta for a 1200 equivalent weight Nafion polymer film were also plotted in Figures 2 and 3, as curve N, for comparison. See "Dynamic Mechanical Studies of Partially Ionized and Neutralized Nafion® Polymers", Thein Kyu, Mitsuaki Easihyama, and A. Eisenberg, Can. J. Chem., Vol. 61, p. 680, 1983.

## COMPARATIVE EXAMPLE 4

The water of hydration was determined for Nafion® Polymers having various equivalent weights from U.S. Patent 4,358,545. The results are shown in Table V.

TABLE V

| (Moles water/equivalent of $SO_3E+$) | |
|---|---|
| Eq. Wt. | Nafion Polymers |
| 1625 | 13.8 |
| 1200 | 20 |
| 1000 | 26 |
| 950 | 28.4 |
| 900 | 31 |
| 850 | 35.3 |

When compared to the data of Example 1, this data shows that the hydration per functional group in Polymers "A", "B", "D" and "E" is less than the hydration per functional group in polymer films of the prior art. Polymers having a low hydration would be expected to have a lower ionic conductivity than polymers containing more water per functional group. Surprisingly, the ratio of water per functional group in the membranes of the present invention remain substantially constant from an equivalent weight of from 1000 to less than 700. By contrast it is seen that the ratio of water per functional group in the Nafion® polymer films of the present state-of-the-art increases significantly with decreased equivalent weight and, it is believed, are not useful below 1000 equivalent weight because of over-swelling.

## COMPARATIVE EXAMPLE 5

A Nafion® ion exchange polymer film having an equivalent weight of 1200 was tested for ionic conductivity as in Example 1, by R. S. Yeo, et al as reported in Transport Processes in Electrochemical Systems, R. S. Yeo, T. Katan, D. T. Chin, Proceedings, Volume 82-10, The Electrochemical Society, Pennington, N.J. 08534. It showed an ionic conductivity of 0.058 chm$^{-1}$ cm$^{-1}$. This is shown in Figure 6 as point "N".

When compared to the data of Example 1, this illustrates that polymer films of the present invention display higher ionic conductivities than those of the prior art while concurrently retaining less water per functional group. Therefore, power loss in a fuel cell is expected to be significantly decreased.

**Claims**

1.  Use of a cell component in a fuel cell, said component having two planarly disposed electrodes bonded to or intimately pressed against opposing sides of a proton exchange active film which has sulfonyl ion exchange active groups present in their protonated form, and further has an equivalent weight of less than 1000, characterized in that the cell component is used in a fuel cell operating at above 110°C, wherein the film which forms part of the cell component

    -   comprises a copolymer of at least two monomers,

        a first monomer being selected from tetrafluoroethylene, trifluoromonochloroethylene, trifluoroethylene, vinylidene fluoride, 1,1-difluoro-2,2-dichloroethylene, 1,1-difluoro-2-chloroethylene, hexafluoropropylene, 1,1,1,3,3-pentafluoropropylene, octafluoroisobutylene, ethylene, vinyl chloride, trifluoronitrosomethane, perfluoronitrosoethane and alkyl vinyl ester; and

        a second monomer being selected from compounds represented by the general formula:

        $$Y\text{-}(CF_2)_a\text{-}(CFR_f)_b\text{-}(CFR'_f)_c\text{-}O\text{-}[CF(CF_2X)\text{-}CF_2\text{-}O]_n\text{-}CF = CF_2$$

        where
        Y is $-SO_3H$;
        a is 0-6;
        b is 0-6;
        c is 0 or 1;
        provided $a + b + c$ is not equal to 0;
        X is Cl or Br;
        n is 0 to 6; and
        $R_f$ and $R'_f$ are independently selected from the group consisting of F, Cl, perfluoroalkyl radicals having from 1 to about 10 carbon atoms and fluorochloroalkyl radicals having from 1 to about 10 carbon atoms, and

    -   possesses a storage modulus of greater than $1 \times 10^9 \mu N/cm^2$ at a temperature greater than 110°C.

2.  Use of a cell component according to claim 1, characterized in that the film which forms part of the cell component comprises the first and the second monomer being as defined in claim 1, and a third monomer being selected from monomers represented by the general formula:

    $$Y'\text{-}(CF_2)_{a'}\text{-}(CFR_f)_{b'}\text{-}(CFR'_f)_{c'}\text{-}0\text{-}[CF(CF_2X')\text{-}CF_2\text{-}0]_{n'}\text{-}CF = CF_2$$

    where
    Y' is Cl or Br;
    a' and b' are independently 0-3;
    c' is 0 or 1;
    provided $a' + b' + c'$ is not equal to 0;
    n' is 0-6;
    $R_f$ and $R'_f$ are independently selected from the group consisting of Br, Cl, F, perfluoroalkyl radicals having from 1 to 10 carbon atoms, and chloroperfluoroalkyl radicals having from 1 to 10 carbon atoms;
    X' is F, Cl, Br, or mixtures thereof when $n' > 1$.

3.  Use of a cell component according to claim 1 or 2, characterized in that the film has a viscosity above $1.4 \times 1^2$ Pa.s at a shear rate of 100/s and a viscosity above $2.2 \times 10^2$ Pa.s at a shear rate of 10/s at a temperature of at least 149°C while the film is in its $-SO_2F$ form.

4.  Use of a cell component according to claim 1 or 2, characterized in that the film has a viscosity less than $1.6 \times 10^3$ Pa.s at a shear rate of 100/s and a viscosity less than $7.5 \times 10^3$ Pa.s at a shear rate of 10/s at a temperature of at least 149°C while the film is in its $-SO_2$ form.

5.  Use of a cell component according to claims 1-4, characterized in that the cell component includes a porous support supporting said film.

**6.** Use of a cell component according to claim 5, characterized in that the supported film has sufficient strength to withstand a pressure differential on its sides of at least 689 kPa.

**Patentansprüche**

**1.** Verwendung einer Zellkomponente in einer Brennstoffzelle, wobei die Komponente zwei planar angeordnete Elektroden besitzt, die an entgegengesetzten Seiten eines Protonenaustauscher-Aktivfilms gebunden oder eng dagegen gepreßt sind, der in ihrer protonierten Form vorliegende Sulfonyl-Ionenaustauscher-Aktivgruppen besitzt und weiterhin ein Äquivalenzgewicht von weniger als 1000 besitzt,

**dadurch gekennzeichnet,**

daß die Zellkomponente in einer bei über 110°C betriebenen Brennstoffzelle verwendet wird, worin der Film, der einen Teil der Zellkomponente bildet,

- ein Copolymer aus mindestens 2 Monomeren umfaßt, wobei ein erstes Monomer aus Tetrafluorethylen, Trifluormonochlorethylen, Trifluorethylen, Vinylidenfluorid, 1,1-Difluor-2,2-dichlorethylen, 1,1-Difluor-2-chlorethylen, Hexafluorpropylen, 1,1,1,3,3-Pentafluorpropylen, Octafluorisobutylen, Ethylen, Vinylchlorid, Trifluornitrosomethan, Perfluornitrosoethan und Alkylvinylester ausgewählt ist und

ein zweites Monomer aus Verbindungen ausgewählt ist, die durch die allgemeine Formel dargestellt sind:

$$Y\text{-}(CF_2)_a\text{-}(CFR_f)_b\text{-}(CFR'_f)_c\text{-}O\text{-}[CF(CF_2X)\text{-}CF_2\text{-}O]_n\text{-}CF=CF_2$$

worin
$Y$ -$SO_3H$ ist,
$a$ 0 bis 6 ist,
$b$ 0 bis 6 ist,
$c$ 0 oder 1 ist,
vorausgesetzt, daß $a+b+c$ nicht gleich 0 ist,
$X$ Cl oder Br ist,
$n$ 0 oder 6 ist und
$R_f$ und $R'_f$ unabhängig aus der Gruppe, bestehend aus F, Cl, Perfluoralkylresten mit 1 bis etwa 10 Kohlenstoffatomen und Fluorchloralkylresten mit 1 bis etwa 10 Kohlenstoffatomen ausgewählt sind und

- ein Speichermodul von mehr als $1 \times 10^9$ $\mu$N/cm$^2$ bei einer Temperatur von mehr als 110°C besitzt.

**2.** Verwendung einer Zellkomponente nach Anspruch 1,
**dadurch gekennzeichnet,**
daß der Film, der einen Teil der Zellkomponente bildet, das erste und das zweite Monomer wie in Anspruch 1 definiert und ein drittes Monomer umfaßt, das aus Monomeren ausgewählt ist, die durch die allgemeine Formel dargestellt sind:

$$Y'\text{-}(CF_2)_{a'}\text{-}(CFR_f)_{b'}\text{-}(CFR'_f)_{c'}\text{-}O\text{-}[CF(CF_2X')\text{-}CF_2\text{-}O]_{n'}\text{-}CF=CF_2$$

worin
$Y'$ Cl oder Br ist,
$a'$ und $b'$ unabhängig 0 bis 3 sind,
$c'$ 0 oder 1 ist,
vorausgesetzt, daß $a'+b'+c'$ nicht gleich 0 ist,
$n'$ 0 bis 6 ist,
$R_f$ und $R'_f$ unabhängig aus der Gruppe ausgewählt sind, die aus Br, Cl, F, Perfluoralkylresten mit 1 bis 10 Kohlenstoffatomen und Chlorperfluoralkylresten mit 1 bis 10 Kohlenstoffatomen besteht,
$X'$ F, Cl, Br oder, wenn $n' > 1$, Gemische davon ist.

**3.** Verwendung einer Zellkomponente nach Anspruch 1 oder 2,
**dadurch gekennzeichnet,**
daß der Film eine Viskosität von über $1,4 \times 10^2$ Pa•s bei einer Scherungsrate von 100/s und eine Viskosität von über 2,2 x $10^2$ Pa$\bullet$s bei einer Scherungsrate von 10/s bei einer Temperatur von mindestens 149°C besitzt, während der Film in seiner -SO$_2$F-Form ist.

4. Verwendung einer Zellkomponente nach Anspruch 1 oder 2,
   **dadurch gekennzeichnet,**
   daß der Film eine Viskosität von weniger als 1,6 x $10^3$ Pa$\bullet$s bei einer Scherungsrate von 100/s und eine Viskosität von weniger als 7,5 x $10^3$ Pa$\bullet$s bei einer Scherungsrate von 10/s bei einer Temperatur von mindestens 149°C aufweist, während der Film in seiner -SO$_2$F-Form ist.

5. Verwendung einer Zellkomponente nach einem der Ansprüche 1 bis 4,
   **dadurch gekennzeichnet,**
   daß die Zellkomponente einen den Film unterstützenden porösen Träger enthält.

6. Verwendung einer Zellkomponente nach Anspruch 5,
   **dadurch gekennzeichnet,**
   daß der unterstützte Film eine ausreichende Festigkeit hat, um einem Druckdifferential an seinen Seiten von mindestens 689 kPa zu widerstehen.

**Revendications**

1. Utilisation d'un composant de pile dans une pile à combustible, ledit composant comportant deux électrodes de configuration plane, collées aux faces opposées ou intimement pressées contre les faces opposées d'un film actif échangeur de protons, qui comporte des groupes sulfonyle actifs lors de l'échange d'ions, présents sous leur forme protonée, et présente en outre un poids d'équivalent inférieur à 1000, caractérisée en ce que le composant de pile est utilisé dans une pile à combustible fonctionnant à plus de 110°C, et le film formant une partie du composant de pile
   - comporte un copolymère d'au moins deux monomères,
     un premier monomère choisi parmi le tétrafluoroéthylène, le trifluoromonochloroéthylène, le trifluoroéthylène, le fluorure de vinylidène, le 1,1-difluoro-2,2-dichloroéthylène, le 1,1-difluoro-2-chloroé-thylène, l'hexafluoropropylène, le 1,1,1,3,3-pentafluoropropylène, l'octafluoroisobutylène, l'éthylène, le chlorure de vinyle, le trifluoronitrosométhane, le perfluoronitrosoéthane et un alkyl-vinyl-ester ; et
     un second monomère choisi parmi les composés représentés par la formule générale :

$$Y-(CF_2)_a-(CFR_f)_b-(CFR'_f)_c-O-[CF(CF_2X)-CF_2-O]_n-CF=CF_2$$

     dans laquelle
     Y représente -SO$_3$H,
     a vaut de 0 à 6,
     b vaut de 0 à 6,
     c vaut 0 ou 1,
     pourvu que a + b + c ne soit pas égal à zéro,
     X représente Br ou Cl,
     n vaut de 0 à 6, et
     R$_f$ et R'$_f$ sont indépendamment choisis dans le groupe constitué par F, Cl, les radicaux perfluoroalkyle comportant de 1 à 10 atomes de carbone et les radicaux fluorochloroalkyle comportant de 1 à 10 atomes de carbone,
   - et présente un module en stockage supérieur à $1.10^9$ $\mu$N/cm$^2$ à une température supérieure à 110°C.

2. Utilisation d'un composant de pile selon la revendication 1, caractérisée en ce que le film formant une partie du composant de pile comporte le premier et le second monomères définis dans la revendication 1, et un troisième monomère choisi parmi les monomères représentés par la formule générale :

$$Y'-(CF_2)_{a'}-(CFR_f)_{b'}-(CFR'_f)_{c'}-O-[CF(CF_2X')-CF_2-O]_{n'}-CF=CF_2$$

   dans laquelle
   Y' représente Cl ou Br,

a' et b' valent indépendamment de 0 à 3,

c' vaut 0 ou 1,

pourvu que a' + b' + c' ne soit pas égal à zéro,

n' vaut de 0 à 6,

$R_f$ et $R'_f$ sont indépendamment choisis dans le groupe constitué par Br, Cl, F, les radicaux perfluoroalkyle comportant de 1 à 10 atomes de carbone et les radicaux chloroperfluoroalkyle comportant de 1 à 10 atomes de carbone,

et X' représente F, Cl, Br ou un de leurs mélanges quand n' est supérieur à 1.

3. Utilisation d'un composant de pile selon la revendication 1 ou 2, caractérisée en ce que le film présente une viscosité supérieure à $1,4.10^2$ Pa.s pour une vitesse de cisaillement de 100 $s^{-1}$ et une viscosité supérieure à $2,2.10^2$ Pa.s pour une vitesse de cisaillement de 10 $s^{-1}$, à une température d'au moins 149°C, alors que le film se trouve sous sa forme $-SO_2F$.

4. Utilisation d'un composant de pile selon la revendication 1 ou 2, caractérisée en ce que le film présente une viscosité inférieure à $1,6.10^3$ Pa.s pour une vitesse de cisaillement de 100 $s^{-1}$ et une viscosité inférieure à $7,5.10^3$ Pa.s pour une vitesse de cisaillement de 10 $s^{-1}$, à une température d'au moins 149°C, alors que le film se trouve sous sa forme $-SO_2F$.

5. Utilisation d'un composant de pile selon l'une des revendications 1 à 4, caractérisée en ce que le composant de pile comporte un support poreux supportant ledit film.

6. Utilisation d'un composant de pile selon la revendication 5, caractérisée en ce que le film supporté présente une résistance mécanique suffisante pour résister à une différence d'au moins 689 kPa entre les pressions s'exerçant sur ses deux faces.

FIG. I

FIG.2

FIG.3

FIG.4

FIG.5

FIG.6